(19) Europäisches Patentamt
European Patent Office
Office européen des brevets

(11) **EP 3 824 038 B1**

(12) **EUROPEAN PATENT SPECIFICATION**

(45) Date of publication and mention
of the grant of the patent:
**16.08.2023 Bulletin 2023/33**

(51) International Patent Classification (IPC):
***C09J 123/20*** (2006.01)    ***C08F 210/08*** (2006.01)
***C08F 210/16*** (2006.01)    ***C08F 4/659*** (2006.01)

(21) Application number: **19737764.1**

(22) Date of filing: **15.07.2019**

(52) Cooperative Patent Classification (CPC):
(C-Sets available)
**C09J 123/20; C08F 210/08;** C08F 4/65912;
C08F 2420/06; C08L 2314/06      (Cont.)

(86) International application number:
**PCT/EP2019/068940**

(87) International publication number:
**WO 2020/016144 (23.01.2020 Gazette 2020/04)**

(54) **POLYOLEFIN-BASED HOT MELT ADHESIVE COMPOSITION**

POLYOLEFINBASIERTE HEISSSCHMELZHAFTKLEBERZUSAMMENSETZUNG

COMPOSITION ADHÉSIVE THERMOFUSIBLE À BASE DE POLYOLÉFINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2018 EP 18184148**

(43) Date of publication of application:
**26.05.2021 Bulletin 2021/21**

(73) Proprietor: **Basell Poliolefine Italia S.r.l.
20121 Milano (IT)**

(72) Inventors:
• **MARCHINI, Roberta
44122 Ferrara (IT)**
• **GUERRA, Silvia
44122 Ferrara (IT)**
• **PASQUALI, Stefano
44122 Ferrara (IT)**
• **RASTOGI, Ankur
65760 Eschborn (DE)**
• **SPATARO, Stefano
44122 Ferrara (IT)**

(74) Representative: **LyondellBasell
c/o Basell Poliolefine Italia
Intellectual Property
P.le Donegani 12
44122 Ferrara (IT)**

(56) References cited:
**EP-A1- 3 266 825      WO-A1-2018/007451
WO-A1-2020/016143**

EP 3 824 038 B1

(52) Cooperative Patent Classification (CPC): (Cont.)

C-Sets
**C08F 210/08, C08F 4/65927;**
C08F 210/08, C08F 210/16, C08F 2500/03,
C08F 2500/08, C08F 2500/12, C08F 2500/17,
C08F 2500/32, C08F 2500/34

C-Sets
**C08F 210/08, C08F 4/65927;**
C08F 210/08, C08F 210/16, C08F 2500/03,

**Description**

FIELD OF THE INVENTION

The present disclosure relates to a polyolefin-based hot melt adhesive composition comprising butene-1 copolymers having very high melt flow.

BACKGROUND OF THE INVENTION

Hot melt adhesive compositions comprising highly flowable butene-1 homo- or copolymers are known in the art, for example from the European patent applications EP671431 (Himont Inc.) or from EP314495 (Shell Oil Company).
The polybutene-1 comprised in the composition disclosed in the documents cited above are visbroken with peroxides to achieve low viscosity values. It is also known in the art that the use of peroxidic degradation brings about some disadvantages, such as unpleasant odor and high yellow index, which may prevent the use of said composition in some technical fields, such as food packaging.
Ex-reactor low molecular weight polyolefins are also known to be suitable for use in hot melt adhesive compositions.
For instance, US2008190541A1 discloses a hot melt adhesive compositions containing at least two metallocene-catalytically produced butene-1 copolymers, which differ from each other for the melt flow indices. The low melt index component is essential to obtain the balance of properties for the hot melt adhesive.
US6218457B1 discloses hot melt adhesives containing polybutylene copolymers having a favorable balance of properties. The polybutylene copolymers may be highly flowable, with a melt flow rate of about 700 g/10min.
Hot melt adhesive composition containing butene-1 copolymers having MFR in the range from 200 to 1500 g/10min are known from the International patent applications WO2015/074830 and WO2018007451 and from the European patent application EP3266825. Said compositions exhibit a good compromise between rheological and thermal properties.
In this context, it is still felt the need of polyolefin-based hot melt adhesive compositions with a broad operational temperature range, good thermal and color stability, and good adhesive properties.

SUMMARY OF THE INVENTION

The Applicant has now found a polyolefin-based hot melt adhesive composition having good thermal and color stability, high overlap shear strength and SAFT and long open time.
The hot melt adhesive composition of the present disclosure comprises:

(A) 25-75 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500; and
(B) 75-25 wt.% of at least one additional component selected from among waxes, resins, plasticizers, additional polymers and mixtures thereof,

wherein the amounts of A) and B) are referred to the total weight of A) + B).
The hot melt adhesive composition of the instant disclosure are also endowed with a good balance between thermal properties, crystallinity, viscosity and adhesive properties.

BRIEF DESCRIPTION OF THE DRAWINGS

The claimed subject matter may be understood by reference to the following description taken in conjunction with the accompanying figures in which:

FIG. 1 provides the viscosity values at different temperatures of the hot melt adhesive composition of example 1 and of comparative example 2 and 3, measured at shear rate of 100s$^{-1}$;
FIG. 2 illustrates the Overlap Shear Strength values of the HMA adhesives of example 1 and of comparative examples 2 and 3;
FIG. 3 provides the viscosity values at different temperatures of the hot melt adhesive composition of example 4 and of comparative examples 5-6, measured at shear rate of 100s$^{-1}$.

DETAILED DESCRIPTION OF THE INVENTION

In the context of the present disclosure, the term "room temperature" indicates a temperature of 25±2°C measured at 50% of relative humidity.

In the context of the present disclosure the term "solid" indicates a material having a well definite volume and an own shape at room temperature.

The expression "not solid" indicates a matter which is "rheologically liquid", i.e. a matter having a Viscous Modulus G" that is greater than its Elastic Modulus G', or also, what is equivalent by definition, a Tan Delta greater than 1, said values being measured at room temperature. Said expression encompasses matter that, even if it can be temporarily shaped in a certain shape, it (in a relatively short period of time, typically not longer than one day) permanently deforms and spontaneously flows, even only by the action of its own weight, taking the shape of the container that contains it or of the solid surface on which it is lying. Therefore in said expression are comprised not only all the materials that can be described as "liquid", but also materials are defined as "creamy", "pasty", "jelly-like", "fluid", "greasy", "semi-solid", and the like.

An object of the present disclosure is therefore a hot melt adhesive composition comprising:

(A) 25-75 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500; and

(B) 75-25 wt.% of at least one additional component selected from among waxes, resins, plasticizers, additional polymers and mixtures thereof,

wherein the amounts of A) and B) are referred to the total weight of A) + B).

In one embodiment, the butene-1 copolymer component (A) may have a melt flow rate (MFR) measured according to ISO 1133 (190°C, 2.16kg) higher than 2000, more preferably higher than or equal to 2200 g/10min, still more preferably higher than or equal to 2400 g/10min.

In one embodiment, the butene-1 copolymer component (A) may have a MFR measured according to ISO 1133 (190°C, 2.16kg) lower than 3000 g/10min., preferably comprised in the range higher than 1500-3000 g/10min., more preferably in the range higher than 2000-2900 g/10min., more preferably in the range 2200-2800 g/10min, particularly preferably in the range 2400-2700 g/10min.

The at least one comonomer is selected from ethylene, propylene, C5-C10 alpha-olefins and mixtures thereof, preferably said at least one comonomer can be selected from ethylene, propylene, hexene-1, octene-1 and mixture thereof.

More preferably the at least one comonomer can be ethylene.

The butene-1 copolymer component (A) may preferably have a copolymerized comonomer content, in particular a copolymerized ethylene content, of 0.5-3.0 wt.%, more preferably of 0.7-2.0 wt.%.

Preferably, the butene-1 copolymer component (A) may have at least one of the following additional features:

(a) a molecular weight distribution (Mw/Mn) lower than 4, preferably lower than 3; more preferably lower than 2.5, the lower limit being of 1.5 in all cases; and/or
(b) melting point (TmII) lower than 110°C, preferably lower than 100°C, more preferably lower than 90°C; and/or
(c) melting point (TmII) higher than 80°C; and/or
(d) glass transition temperature (Tg) in the range from - 40°C to - 10°C, preferably from -30°C to -10°C; and/or
(e) rotational (Brookfield) viscosity at 180°C (shear rate 100 s-1) lower than 8000 mPa.s, preferably equal to or lower than 7000 mPa.s, more preferably equal to or lower than 6000 mPa.s, still more preferably lower than 5000 mPa.s, the lower limit being 3000 mPa.s in all cases; and/or
(f) X-ray crystallinity comprised in the range 25-60%, preferably in the range 35-60%.

In one embodiment, the butene-1 copolymer (A) may have all the additional features (a)-(t).

Optionally, the butene-1 copolymer component (A) may have at least one of the further following additional features:

(i) intrinsic viscosity (IV) measured in tetrahydronaphtalene (THN) at 135°C equal to or lower than 0.8 dl/g, preferably comprised between 0.2 and 0.6 dl/g; and/or
(ii) a density of higher than 0.895-0.925 g/cm$^3$, preferably of 0.900-0.920 g/cm$^3$, more preferably of 0.900-0.915 g/cm$^3$, still more preferably of 0.902-0.915 g/cm$^3$.

In one embodiment, the butene-1 copolymer (A) may have the additional features (i) and (ii).

In a further embodiment, the butene-1 copolymer (A) may have all the additional features (a)-(f) and also the additional features (i) and (ii).

The butene-1 copolymer component (A) can be obtained by copolymerizing butene-1 and the at least one comonomer in the presence of a catalyst system obtainable by contacting:

- a stereorigid metallocene compound;
- an alumoxane or a compound capable of forming an alkyl metallocene cation; and, optionally,
- an organo aluminum compound.

WO2004/099269, and in WO2006/045687 describe a process and a catalysts system suitable for producing the butene-1 copolymer component (A).

The butene-1 copolymer component (A) can be obtained by a polymerization process carried out in one or more reactors connected in series. In the latter case, the catalyst can be added in the first reactor only, or in more than one reactor. As explained in WO2004/099269, the polymerization process can be carried out in the liquid phase, optionally in the presence of an inert hydrocarbon solvent, or in the gas phase, using fluidized bed or mechanically agitated gas phase reactors. Preferably, the polymerization process is carried out by using liquid butene-1 as polymerization medium. The polymerization temperature ranges from 20°C to 150°C, preferably from 50°C to 90°C, more preferably it is from 68°C to 82°C.

As explained in WO2006/045687, hydrogen can be advantageously used to regulate the molecular weight of butene-1 copolymers. The concentration of hydrogen during the polymerization reaction carried out in the liquid phase (molar ppm H2/(C4-)bulk) is higher than 2000mol ppm and lower than 10000mol ppm, preferably it ranges from 3000mol ppm to 10000mol ppm, more preferably from 4000 to 6000mol ppm.

Butene-1 copolymers having low melting point can be obtained by properly selecting the copolymerized comonomer content, in particular ethylene content. Thus, the butene-1 copolymer component (A) can be obtained with a polymerization process wherein the amount of the comonomer, in particular of ethylene, in the liquid phase ranges from 0.1 wt.% to 1.8 wt.%, preferably from 0.2 wt.% to 1.3 wt.%, with respect to the total weight of butene-1 monomer present in the polymerization reactor.

The hot melt adhesive composition of the invention is further comprising at least one additional component (B) selected from among waxes (1), resins (2), plasticizers (3), additional polymers (4) and mixtures thereof.

According to one embodiment, the at least one additional component (B) may be solid at room temperature.

The additional component (B) may not be a "not solid" viscosity modifier.

In one embodiment, said at least one additional component (B) may be selected from among waxes (1), resins (2), additional polymers (4) and mixtures thereof, preferably from waxes (1), resins (2) and mixtures thereof.

Suitable waxes (1) can be selected among polyolefin waxes; natural (plant, animal or mineral) waxes; petroleum waxes, such as paraffin waxes; synthetic waxes made by polymerizing CO and $H_2$, such as Fischer-Tropsch waxes; naphtalenic waxes and mixtures thereof, preferably Fischer-Tropsch waxes.

Resins (2) suitable as component (B) in the hot melt adhesive composition of the present disclosure are tackifiers that can be selected among hydrogenated hydrocarbon resins and derivatives thereof, such as aliphatic hydrocarbon resins, aromatic hydrocarbon resins and aliphatic/aromatic hydrocarbon resins; terpene-derived resins, such as polyterpenes, terpene/phenolic resins; natural resins and natural resin esters, such as rosin, rosin ester and tall oil rosin ester; and mixtures thereof, preferably hydrogenated hydrocarbon resins.

Plasticizers (3) can be selected among plasticizing oils, such as mineral oils; olefin oligomers or low molecular weight polyolefins, such as liquid polybutylenes; and mixtures thereof.

The at least one further component (B) of the hot melt adhesive composition may be an additional polymer (4) selected among amorphous poly-alpha-olefins, thermoplastic polyurethanes, ethylene/(meth)acrylate copolymers, ethylene/vinyl acetate copolymers, and mixtures thereof.

The hot melt adhesive composition of the present disclosure can be tailored for different applications, thereby optimizing viscosity and adhesion properties. The hot melt adhesive composition of the present disclosure preferably has rotational (Brookfield) viscosity at 190°C (shear rate 100 s-1) equal to or lower than 10000 mPa.s, more preferably lower than 7000 mPa.s, still more preferably lower than 6000 mPa.s.

In one embodiment, the hot melt adhesive composition of the present disclosure may have preferably rotational (Brookfield) viscosity at 170°C (shear rate 100 s-1) equal to or higher than 6000 mPas.s, preferably equal to or higher than 7000 mPas.s.

The hot melt adhesive composition is therefore suitable for use in woodworking, for packaging, in the general assembly field, etc, particularly to assembly components of electrical equipment, ceramics, furniture, textiles, upholstery, leather, plastic, paper and cardboard.

According to one embodiment, the hot melt adhesive composition of the present disclosure can be a composition (i) comprising:

(A) 65-75 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500; and
(B.2) 25-35 wt.% of at least one resin,

wherein the amounts of (A) and (B.2) are referred to the to the total weight of (A) + (B.2) and wherein the components (A) and (B.2) are as described above.

The composition (i) is particularly suitable for use in woodworking and in the general assembly field, eg. to assembly components of electrical equipment, ceramics, furniture, textiles, upholstery, leather, plastic, etc.

In one embodiment, the hot melt adhesive composition (i) may have rotational (Brookfield) viscosity at 170°C (shear rate 100 s-1) equal to or higher than 6000 mPas.s, preferably equal to or higher than 7000 mPas.s.

In a further embodiment, the hot melt composition (i) may have rotational viscosity at 190°C (shear rate 100 s-1) equal to or lower than 10000 mPa.s, more preferably lower than 7000 mPa.s, still more preferably lower than 6000 mPa.s, and rotational viscosity at 170°C (shear rate 100 s-1) as indicated above.

According to a further embodiment, the hot melt adhesive composition of the present disclosure can be a composition (ii) comprising:

(A) 30-40 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500;
(B.2) 42-52 wt.% of at least one resin; and
(B.1) 15-25 w.% of at least one wax,

wherein the amounts of (A), (B.2) and (B.1) are referred to the to the total weight of (A) + (B.2) + (B.1) and wherein the components (A), (B.1) and (B.2) are as described above.

Said composition (ii) is particularly suitable for use in in the packaging field to assembly paper, cardboard, etc.

In one embodiment, the hot melt adhesive composition (ii) may have rotational (Brookfield) viscosity at 170°C (shear rate 100 s-1) equal to or lower than 2000 mPas.s, preferably in the range 1000-2000 mPas.s.

In a further embodiment, the hot melt composition (ii) may have rotational viscosity at 190°C (shear rate 100 s-1) equal to or lower than 10000 mPa.s, more preferably lower than 7000 mPa.s, still more preferably lower than 6000 mPa.s, and rotational viscosity at 170°C (shear rate 100 s-1) as indicated above.

The hot melt adhesive composition of the present disclosure show very good thermal stability and reduced color change.

In addition to the above-mentioned components (A) and (B), the hot melt adhesive composition of the present disclosure can further preferably comprise additives selected from antioxidants, UV stabilizers, aging protection agents, and mixtures thereof, preferably in an amount from 0.01 to 1 wt.% with respect to the total weight of the hot melt adhesive composition.

The composition of the invention can be prepared by known methods and equipment, such as blending of the component in the molten state in a single- or twin screw extruder.

The following examples are illustrative only, and are not intended to limit the scope of the invention in any manner whatsoever.

EXAMPLES

The following analytical methods are used to determine the properties reported in the description and in the examples.

**Melt flow rate (MFR)** was measured according to ISO 1133 (190°C, 2.16kg, except where different load and temperatures are specified).

**Comonomer content (wt.%)** measured via IR spectroscopy.

The spectrum of a pressed film of the polymer was recorded in absorbance vs. wavenumbers (cm-1). The following measurements were used to calculate the ethylene content: a) area (At) of the combination absorption bands between 4482 and 3950 cm-1 which is used for spectrometric normalization of film thickness;

b) factor of subtraction ($FCR_{C2}$) of the digital subtraction between the spectrum of the polymer sample and the absorption band due to the sequences BEE and BEB (B: 1-butene units, E: ethylene units) of the methylenic groups ($CH_2$ rocking vibration);
c) Area ($A_{C2,block}$) of the residual band after subtraction of the $C_2$PB spectrum. It comes from the sequences EEE of the methylenic groups ($CH_2$ rocking vibration).

APPARATUS

A Fourier Transform Infrared spectrometer (FTIR) was used, which is capable of providing the spectroscopic measurements above reported. A hydraulic press with platens heatable to 200°C (Carver or equivalent) was used.

METHOD

Calibration of (BEB + BEE) sequences

A calibration straight line is obtained by plotting %(BEB + BEE)wt vs. $FCR_{C2}/A_t$. The slope Gr and the intercept Lr are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm. The pressing temperature is 140 $\pm$ 10 °C. A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.
Apodization: Happ-Genzel.
Resolution: 2 cm$^{-1}$.
Collect the IR spectrum of the sample vs. an air background.

CALCULATION

Calculate the concentration by weight of the BEE + BEB sequences of ethylene units:

$$\%(BEE + BEB)wt = Gr\frac{FCR_{C2}}{A_t} + I_r$$

Calculate the residual area (AC2,block) after the subtraction described above, using a baseline between the shoulders of the residual band.
Calculate the concentration by weight of the EEE sequences of ethylene units:

$$\%(EEE)wt = G_H\frac{A_{C2,block}}{A_t} + I_H$$

Calculate the total amount of ethylene percent by weight:

$$\% C2wt = [\%(BEE + BEB)wt + \%(EEE)wt]$$

**Mw/Mn determination.** Measured by way of Get Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were $300 \times 7.5$ mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the K values were KPS = $1.21 \times 10^{-4}$ dL/g and KPB = $1.78 \times 10^{-4}$ dL/g for PS and polybutene (PB) respectively, while the Mark-Houwink exponents $\alpha$ = 0.706 for PS and $\alpha$ = 0.725 for PB were used.

For butene/ethylene copolymers, as far as the data evaluation is concerned, it was assumed for each sample that the composition was constant in the whole range of molecular weight and the K value of the Mark-Houwink relationship was calculated using a linear combination as reported below:

$$K_{EB} = x_E K_{PE} + x_B K_{PB}$$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B$ = 1. The Mark-Houwink exponents $\alpha$ = 0.725 was used for all the butene/ethylene copolymers independently on their composition. End processing data treatment was fixed for all samples to include fractions up at 1000 in terms of molecular weight equivalent. Fractions below 1000 were investigated via GC.

**The thermal properties** were determined by Differential Scanning Calorimetry (D.S.C.) on a Perkin Elmer DSC-7 instrument. The melting temperatures of butene-1 copolymers and of the HMA compositions were determined according to the following method:

- TmII (melting temperature/s measured in second heating run): a weighted sample (5-10 mg) obtained from the polymerization (or a weighted sample of the HMA composition) was sealed into aluminium pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature (Tc). After standing 5 minutes at - 20°C, the sample was heated for the second time at 200°C with a scanning speed corresponding to 10°C/min. In this second heating run, the peak temperature/s measured were marked as (TmII) and the area under the peak (or peaks) as global melting enthalpy (DH TmII),
- The melting enthalpy and the melting temperature were measured also after aging (without cancelling the thermal history) as follows by using the Differential Scanning Calorimetry (D.S.C.) on an Perkin Elmer DSC-7 instrument. A weighted sample (5-10 mg) obtained from the polymerization (or a weighted sample of the HMA composition) was sealed into aluminium pans and heated at 200°C with a scanning speed corresponding to 10°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature (or temperatures when more than one peack was present) were recorded as the melting temperatures (TmI), and the area under the peak (or peaks) as global melting enthalpy after 10 days (DH TmI).

**Glass transition temperature (Tg) via Dynamic Mechanical Thermal Analysis (DMTA).** Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100°C to 130°C. In this way it is possible to plot the elastic response versus temperature. The elastic modulus for a viscoelastic material is defined as E=E'+iE". The DMTA can split the two components E' and E" by their resonance and plot E' vs temperature and E/E" = tan ($\delta$) vs temperature. The glass transition temperature Tg is assumed to be the temperature at the maximum of the curve E/E" = tan ($\delta$) vs temperature.

**Rotational (Brookfield) viscosity**

- <u>for the polymer as such</u>: measured at 180°C and a deformation rate of and 100 s$^{-1}$, using a RheolabQC instrument, which is a rotational rheometer, consisting of a high-precision encoder and a dynamic EC motor. It is possible to select between controlled shear rate (CR) and controlled shear stress (CS) test settings. It is suitable for investigations on the mixing and stirring behavior of emulsions and dispersions and pastes using concentric cylinder systems, double gap systems and different vane geometries and spindles. During the test, the sample is subjected at a deformation rate sweep from 1 $s^{-1}$ to 1000 $s^{-1}$. The torque is measured for each deformation rate and the corresponding viscosity is calculated by the instrument software;

- for the hot melt composition: determined using a Bohlin Gemini viscometer (Malvem) and the following operative conditions: cone/plate 1°/20mm; gap 30 micron; temperature range: 110°-190°C; shear rate 100 $s^{-1}$.

**Crystallinity** was measured by X-Ray diffraction according to the following method: The instrument used to measure crystallinity is a X-ray Diffraction Powder Diffractometer (XDPD) that uses the Cu-K$\alpha$1 radiation with fixed slits and able to collect spectra between diffraction angle 2$\Theta$ = 5° and 2$\Theta$ = 35° with step of 0.1° every 6 seconds.

The samples are diskettes of about 1.5-2.5 mm of thickness and 2.5-4.0 cm of diameter made by compression molding. The diskettes are aged at 23°C for 96 hours.

After this preparation the specimen is inserted in the XDPD sample holder. Set the XRPD instrument in order to collect the XRPD spectrum of the sample from diffraction angle 2$\Theta$ = 5° to 2$\Theta$ = 35° with step of 0.1° by using counting time of 6 seconds, at the end the final spectrum is collected.

Defining Ta as the total area between the spectrum profile and the baseline expressed in counts/sec•2$\Theta$.; and Aa as the total amorphous area expressed in counts/sec•2$\Theta$. Ca is total crystalline area expressed in counts/sec•2$\Theta$.

The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa; and
5) Calculate the degree of crystallinity of the sample using the following formula:

$$\%Cr = 100 \times Ca \,/\, Ta$$

**Intrinsic viscosity:** determined in tetrahydronaphthalene at 135 °C according to norm ASTM D 2857.

**Density:** Determined according to norm ISO 1183-1, method A, Part 1: immersion method. Test specimens were obtained by compression moulded plaques. Density is measured after 10 days conditioning.

**Flexural modulus** was measured according to ISO 178. Specimens for flexural test were cut from compression molded plaques pressed at 200°C and aged via autoclave at RT for 10min at 2kbar. Specimens thickness was of 4mm.

**Preparation of catalyst components:** Dimethylsilyl{(2,4,7-trimethyl-1-indenyl)-7-(2,5-dimethyl-cyclopenta[1,2-b:4,3-b']-dithiophene)} zirconium dichloride (A-1) was prepared according to Example 32 of WO0147939.

**Preparation of the catalytic solution:** Under nitrogen atmosphere, 6400 g of a 33 g/L solution of triisobutylaluminium (TIBA) in isododecane and 567 g of 30% wt/wt solution of methylalumoxane (MAO) in toluene are loaded in a 20 L jacketed glass reactor, stirred by means of an anchor stirrer, and allowed to react at 25°C for about 1 hour under stirring.

After this time, 1.27 g of metallocene A-1 is added and dissolved under stirring for about 30 minutes.

The final solution is discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|---|---|---|---|
| 1.72 | 0.0029 | 2001 | 137 |

**Preparation of butene-1 copolymer [component (A)]:** The polymerization was carried out in two stirred reactors operated in series, in which liquid butene-1 constituted the liquid medium. The catalyst system described above was injected in both reactors and the polymerization was carried out in continuous at a polymerization temperature of 75°C. The residence time in each reactor was in a range of 120÷200 min. The concentration of hydrogen during polymerization was 4900ppm mol H2/(C4-) bulk. The comonomer was fed to the reactors in an amount of C2/C4-0.35%wt.

The ethylene comonomer is almost immediately copolymerized (C2- "stoichiometric" feed to the reactor). The catalyst yield (mileage) is of 2000 kg/g metallocene active component. The butene-1 copolymer was recovered as melt from the solution and cut in pellets. The copolymer was further characterized and the data are reported in Table 1.

Table 1

| MFR | g/10min | 2500 |
|---|---|---|
| C2 (IR) | wt.% | 1.1 |
| IV | dl/g | 0.34 |
| Mw/Mn | | 2.1 |
| TmII | °C | 83.5 |
| TmI | | 103 |
| Tg | °C | -13 |
| Viscosity (180°C) | mPa.s | 4200 |
| Crystallinity | % | 55 |
| Density | g/cm$^3$ | 0.912 |
| Flexural Modulus | MPa | 300-350 |

**Preparation of the hot melt adhesive compositions:** butene-1 copolymer obtained as described above (PB-1), or the commercial polymers of the comparative examples, and the resin were melted in a ventilated oven at 170°C and subsequently mixed in a high speed mixer (Thinky) at 1200 rpm. The mixing process was carried out in 2/3 steps:

- step 1: about half of the amount of butene-1 copolymer, about half the amount of the resin and the whole amount of additive were loaded to the mixer and mixed for 8 minutes;
- step 2: the rest of the polymer and the resin were loaded to the mixer and mixed for 8 minutes; and optionally
- step 3: the composition was left to stand for 10 minutes and subsequently the wax was added. The resulting blend was mixed for 8 minutes.

After complete mixing, the blend was poured onto a silicone-coated release paper and an adhesive film of 300μm was produced with a roller press.

**Overlap Shear Strength (OLS).** The overlap shear strength of the hot melt adhesive compositions is determined by adhering 300±50mm2 of overlapping ends of specimens of different materials measuring 25x75x1.5 mm with a layer of the hot melt adhesive composition to be tested, such that the free ends of the specimens extend in opposite directions. The specimens are pressed together with 800kPa = 80N/cm$^2$ pressure for 30 seconds. The samples are tested after 24h storage at room temperature (25°±2°C). The free ends of the specimens are inserted in the jaws of a Zwick Roll Universal test system Type UTS 20kN table module constructed to DIN EN 51220, Zwick GmbH & Co. KG 89079 Ulm. Load cell type U2A, 20kN, Hottinger Baldwin Messtechnik, 64293 Darmstadt. The specimens are separated with an angle of 180°, pulling the jaws at a rate of 2mm/min. The overlap shear strength value thus obtained is recorded in MegaPascals (MPa). The following conditioned materials were used:

- aluminum alloy AlMg3 sand blasted with high-class corundum F100; cleaning standard SA ½ according to ISO 8501-1;
- polypropylene (PP) cleaned with methyl ethyl ketone, 5 minutes drying time;
- wood (beech): dust removed with compressed air, surface roughening with abrasive paper (80 grain size, dust removed with compressed air after abrasion.

**Shear Adhesion Failure Temperature.** Measured according to the test method PSTC-17 (Date of issuance 12112).

**Open time.** The open time is defined as the longest time that an adhesive material remains capable of adhesion after it has been cooled from the melt to room temperature. A uniform bead of 1.5 g/m of the hot melt composition molten at 170°C was applied onto a specimen of cardboard substrate 200x24.8mm at ambient temperature (one side coated, 400 g/m$^2$ chromo duplex cardboard GD2), and then the second cardboard specimen pressed on to it by a 2kg roller. After fixed intervals of 5 seconds, the second carboard specimen was slowly pulled apart . The total time until no fiber tear occurred was recorded as the open time for the adhesive for that sample specimen. An average of the open time was taken from three such recordings. The relative open time is expressed as % with respect to the lowest value.

**Example 1 and comparative examples 2-3**

Hot melt adhesive compositions were prepared as described above with the formulation is indicated in table 2. The HMA compositions were tested for thermal properties, which are reported in the same table 2.

Table 2

|  |  | Example 1 | Comp. ex. 2 | Comp. ex. 3 |
|---|---|---|---|---|
| Vestoplast 608 | wt.% |  | 28 |  |
| Vestoplast 703 | wt.% |  | 41.5 |  |
| Vestoplast 708 | wt.% |  |  | 28 |
| Vestoplast 750 | wt.% |  |  | 41.5 |
| PB-1 | wt.% | 69.5 |  |  |
| Eastotack H130L | wt.% | 30 | 30 | 30 |
| AO-1010 | wt.% | 0.5 | 0.5 | 0.5 |
|  |  |  |  |  |
| Tml | °C | 100 | 38 | 42 |
| Tc | °C | / | 56 | 41 |
| Tg | °C | -26 | -21 | -17 |

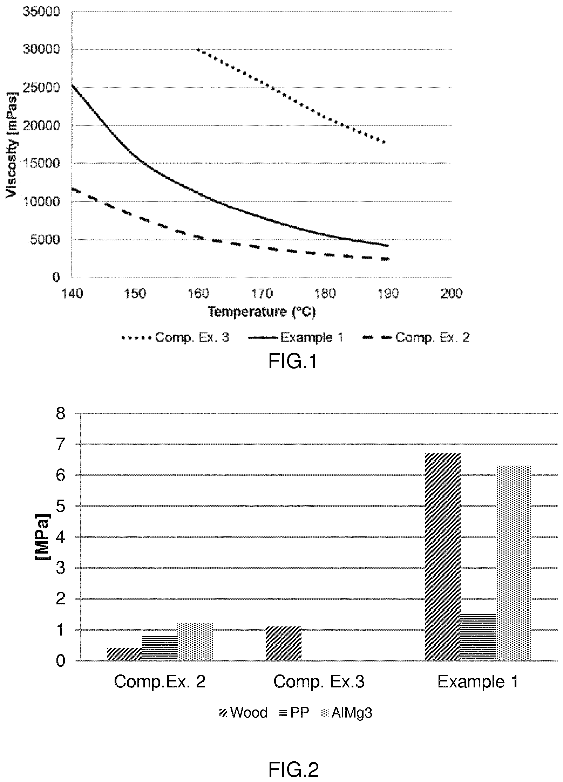

Vestoplast 608, Vestoplast 703, Vestoplast 708 and Vestoplast 750 are amorphous alpha-olefin polymers having Ring and Ball softening point, measured according to DIN EN 1427, of 157°C, 124°C, 106°C and 107°C respectively, marketed by Evonik.
Eastotac™ H-130L is a hydrogenated hydrocarbon resin, having a ring and ball softening point of 130°C marketed by Eastman Chemical Company.
Irganox™ 1010 is a sterically hindered phenolic antioxidant.
After firs melting, the composition of example 1 did not show any crystallization peak during cooling.
The viscosity values of the HMA compositions recorded at different temperatures are illustrated in FIG. 1. The Overlap Shear Strength values are illustrated in FIG. 2.
The composition of example 1 showed very good thermal stability after 48h storage in a ventilated oven at 180°C in open glass beakers: no gel formation or skinning was observed and less color change compared to the compositions of comparative examples 2 and 3.
The absolute and relative open time and the SAFT value of the hot melt composition of example 1 and comparative example 2 are reported in table 3.

Table 3

|  |  | Example 1 | Comp. ex. 2 |
|---|---|---|---|
| Open time | sec. | 323 | 243 |
| Relative open time | % | 133 | 100 |
| SAFT | °C | 90 | 64 |

**Example 4 and comparative examples 5 and 6**

Hot melt adhesive compositions were prepared as described above with the formulation is indicated in table 4. The HMA compositions were tested for thermal properties, which are reported in the same table 4.

Table 4

|  |  | Example 4 | Comp. ex. 5 | Comp. ex. 6 |
|---|---|---|---|---|
| Evatane 28420 | wt.% |  | 30.0 |  |
| Affinity G 1900 | wt.% |  |  | 34.7 |
| PB-1 | wt.% | 34.7 |  |  |
| Eastotack H130L | wt.% | 45.0 | 49.7 | 45.0 |
| Sassol Wax H1 | wt.% | 20.0 | 20.0 | 20.0 |
| AO-1010 | wt.% | 0.3 | 0.3 | 0.3 |
|  |  |  |  |  |
| Tml | °C | 99 | 104 | 85 |
| Tc | °C | 93 | 93 | 93 |
| Tg | °C | -23 | (*) | (*) |
| (*) = not detectable |  |  |  |  |

Evatane™ 28-420 is an EVA copolymer with a vinyl acetate content of 28 wt.% marketed by Arkema.

Affinity™ GA 1900 is a polyolefin elastomer marketed by Dow Chemicals.

Sasol Wax H1 is a Fischer-Tropsch wax marketed by Sasol.

The composition of example 4 showed very good thermal stability after 48h storage in a ventilated oven at 180°C in open glass beakers: no gel formation or skinning was observed and good color retention compared to the compositions of comparative examples 5 and 6.

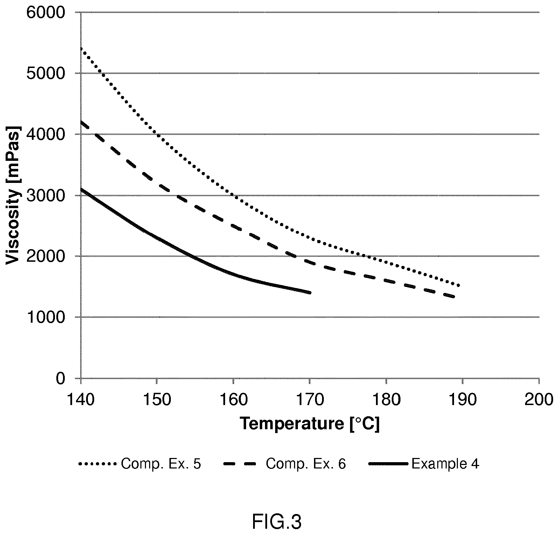

The viscosity values of the HMA compositions recorded at different temperatures are illustrated in FIG. 3. The lower viscosity achieved by the composition of example 4 ensures good wettability of porous substrates, eg. paper or cardboard.

## Claims

1. A hot melt adhesive composition comprising:

   (A) 25-75 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500; and
   (B) 75-25 wt.% of at least one additional component selected from among waxes, resins, plasticizers, additional polymers and mixtures thereof,

   wherein the amounts of A) and B) are referred to the total weight of A) + B).

2. The hot melt adhesive composition according to claim 1, wherein the butene-1 copolymer component (A) has a melt flow rate (MFR) measured according to ISO 1133 (190°C, 2.16kg) higher than 2000, more preferably higher than or equal to 2200 g/10min, still more preferably higher than or equal to 2400 g/10min.

3. The hot melt adhesive composition according to claim 1 or 2, wherein the butene-1 copolymer component (A) has a MFR measured according to ISO1133 (190°C, 2.16kg) lower than 3000 g/10min., preferably comprised in the range higher than 1500-3000 g/10min., more preferably in the range higher than 2000-2900 g/10min., more preferably in the range 2200-2800 g/10min, particularly preferably in the range 2400-2700 g/10min.

4. The hot melt adhesive composition according to any one of claims 1-3, wherein the butene-1 copolymer component (A) has a copolymerized comonomer content of 0.5-3.0 wt.%, more preferably of 0.7-2.0 wt.%.

5. The hot melt adhesive composition according to any one of claims 1-4, wherein the at least one comonomer is selected from ethylene, propylene, hexene-1, octene-1 and mixture thereof, preferably the at least one comonomer is ethylene.

6. The hot melt adhesive composition according to any one of claims 1-4, wherein the butene-1 copolymer component (A) has at least one of the following additional features:

(a) a molecular weight distribution (Mw/Mn) lower than 4, preferably lower than 3; more preferably lower than 2.5, the lower limit being of 1.5 in all cases;
(b) melting point (TmII) lower than 110°C, preferably lower than 100°C, more preferably lower than 90°C;
(c) melting point (TmII) higher than 80°C;
(d) glass transition temperature (Tg) in the range from - 40°C to - 10°C, preferably from -30°C to -10°C;
(e) rotational viscosity at 180°C, shear rate 100 s-1, lower than 8000 mPa.s, preferably equal to or lower than 7000 mPa.s, more preferably equal to or lower than 6000 mPa.s, still more preferably lower than 5000 mPa.s, the lower limit being 3000 mPa.s in all cases;
(f) X-ray crystallinity comprised in the range 25-60%, preferably in the range 35-60%.

7. The hot melt adhesive composition according to any one of claims 1-6, wherein the composition has rotational viscosity at 190°C (shear rate 100 s-1) lower than 10000 mPa.s, more preferably lower than 7500 mPa.s, still more preferably lower than 6000 mPa.s.

8. The hot melt adhesive composition according to any one of claims 1-7, wherein said composition comprises:

(A) 65-75 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500; and
(B.2) 25-35 wt.% of at least one resin,

wherein the amounts of (A) and (B.2) are referred to the to the total weight of (A) + (B.2) and wherein the component (A) is as described in any of claims 1-6.

9. The hot melt adhesive composition according to any one of claims 1-7, wherein the composition comprises:

(A) 30-40 wt.% of a copolymer of butene-1 with at least one comonomer selected from ethylene, propylene, C5-C10 alpha-olefins and mixtures thereof, having copolymerized comonomer content of 0.5-5.0 wt.% and a melt flow rate (MFR) measured according to ISO 1133 (190°C, 2.16kg) higher than 1500;
(B.2) 42-52 wt.% of at least one resin; and
(B. 1) 15-25 w.% of at least one wax,

wherein the amounts of (A), (B.1) and (B.2) are referred to the to the total weight of (A) + (B. 1) + (B.2) and wherein the component (A) is as described in any one of claims 1-6.

10. Use of the hot melt adhesive composition according to any one of claims 1-9 in woodworking, for packaging and in the general assembly field, particularly to assembly components of electrical equipment, ceramics, furniture, textiles, upholstery, leather, plastic, paper and cardboard.

11. The use according to claim 10 of a composition according to claim 8 in woodworking and in the general assembly field, particularly to assembly components of electrical equipment, ceramics, furniture, textiles, upholstery, leather and/or plastic.

12. The use according to claim 10 of a composition according to claim 9 in the packaging field, particularly to assembly paper and/or cardboard.


**Patentansprüche**

1. Schmelzhaftkleberzusammensetzung, umfassend:

(A) 25 bis 75 Gew.% eines Copolymers von Buten-1 mit mindestens einem Comonomer ausgewählt aus Ethylen, Propylen, C5- bis C10-alpha-Olefinen und Mischungen davon, mit einem Gehalt an copolymerisiertem Comonomer von 0,5 bis 5,0 Gew.% und einer Schmelzflussrate (MFR), gemessen gemäß ISO 1133 (190 °C, 2,16 kg), von mehr als 1500; und

(B) 75 bis 25 Gew.% von mindestens einer zusätzlichen Komponente ausgewählt aus Wachsen, Harzen, Plastifizierungsmitteln, zusätzlichen Polymeren und Mischungen davon, wobei die Mengen von A) und B) sich auf das Gesamtgewicht von A) + B) beziehen.

2. Schmelzhaftkleberzusammensetzung nach Anspruch 1, wobei die Buten-1-Copolymerkom-ponente (A) eine Schmelzflussrate (MFR), gemessen gemäß ISO 1133 (190 °C, 2,16 kg), größer als 2000, bevorzugter größer als oder gleich 2200 g/10 min, noch bevorzugter größer als oder gleich 2400 g/10 min hat.

3. Schmelzhaftkleberzusammensetzung nach Anspruch 1 oder 2, wobei die Buten-1-Copoly-merkomponente (A) eine MFR, gemessen gemäß ISO 1133 (190 °C, 2,16 kg), kleiner als 3000 g/10 min, vorzugsweise im Bereich größer als 1500 bis 3000 g/10 min, bevorzugter im Bereich größer als 2000 bis 2900 g/10 min, bevorzugter im Bereich von 2200 bis 2800 g/10 min, besonders bevorzugt im Bereich von 2400 bis 2700 g/10 min hat.

4. Schmelzhaftkleberzusammensetzung nach einem der Ansprüche 1 bis 3, wobei die Buten-1-Copolymerkomponente (A) einen Gehalt an copolymerisiertem Comonomer von 0,5 bis 3,0 Gew.%, bevorzugter 0,7 bis 2,0 Gew.% hat.

5. Schmelzhaftkleberzusammensetzung nach einem der Ansprüche 1 bis 4, wobei das mindestens eine Comonomer ausgewählt ist aus Ethylen, Propylen, Hexen-1, Octen-1 und Mischung davon, wobei vorzugsweise das mindestens eine Comonomer Ethylen ist.

6. Schmelzhaftkleberzusammensetzung nach einem der Ansprüche 1 bis 4, wobei die Buten-1-Copolymerkomponente (A) mindestens eines der folgenden zusätzlichen Merkmale aufweist:

(a) eine Molekulargewichtsverteilung (Mw/Mn) kleiner als 4, vorzugsweise kleiner als 3; bevorzugter kleiner als 2,5, wobei die Untergrenze in allen Fällen 1,5 ist;
(b) einen Schmelzpunkt (TmII) kleiner als 110 °C, vorzugsweise kleiner als 100 °C, bevorzugter kleiner als 90 °C;
(c) einen Schmelzpunkt (TmII) größer als 80 °C;
(d) eine Glasübergangstemperatur (Tg) im Bereich von -40 °C bis -10 °C, vorzugsweise von -30 °C bis -10 °C;
(e) eine Rotationsviskosität bei 180 °C, Scherrate 100 s-1, kleiner als 8000 mPas, vorzugsweise gleich oder kleiner als 7000 mPa·s, bevorzugter gleich oder kleiner als 6000 mPa·s, noch bevorzugter kleiner als 5000 mPa·s, wobei die untere Grenze in allen Fällen 3000 mPa·s ist;
(f) eine Röntgenkristallinität im Bereich von 25 bis 60 %, vorzugsweise im Bereich von 35 bis 60 %.

7. Schmelzhaftkleberzusammensetzung nach einem der Ansprüche 1 bis 6, wobei die Zusammensetzung eine Rotationsviskosität bei 190 °C (Scherrate 100 s-1) kleiner als 10000 mPa·s, bevorzugter kleiner als 7500 mPa·s, noch bevorzugter kleiner als 6000 mPa·s hat.

8. Schmelzhaftkleberzusammensetzung nach einem der Ansprüche 1 bis 7, wobei die Zusammensetzung umfasst:

(A) 65 bis 75 Gew.% eines Copolymers von Buten-1 mit mindestens einem Comonomer ausgewählt aus Ethylen, Propylen, C5- bis C10-alpha-Olefinen und Mischungen davon mit einem Gehalt an copolymerisiertem Comonomer von 0,5 bis 5,0 Gew.% und einer Schmelzflussrate (MFR), gemessen gemäß ISO 1133 (190 °C, 2,16 kg) größer als 1500; und
(B.2) 25 bis 35 Gew.% von mindestens einem Harz,

wobei die Mengen von (A) und (B.2) sich auf das Gesamtgewicht von (A) + (B.2) beziehen, und wobei die Komponente (A) wie in einem der Ansprüche 1 bis 6 beschrieben ist.

9. Schmelzhaftkleberzusammensetzung nach einem der Ansprüche 1 bis 7, wobei die Zusammensetzung umfasst:

(A) 30 bis 40 Gew.% eines Copolymers von Buten-1 mit mindestens einem Comonomer ausgewählt aus Ethylen, Propylen, C5- bis C10-alpha-Olefinen und Mischungen davon, mit einem Gehalt an copolymerisiertem Comonomer von 0,5 bis 5,0 Gew.% und einer Schmelzflussrate (MFR), gemessen gemäß ISO 1133 (190 °C, 2,16kg), größer als 1500; und
(B.2) 42 bis 52 Gew.% von mindestens einem Harz; und
(B.1) 15 bis 25 Gew.% von mindestens einem Wachs,

wobei die Mengen von (A), (B.1) und (B.2) sich auf das Gesamtgewicht von (A) + (B.1) + (B.2) beziehen, und wobei die Komponente (A) wie in einem der Ansprüche 1 bis 6 beschrieben ist.

10. Verwendung einer Schmelzhaftkleberzusammensetzung nach einem der Ansprüche 1 bis 9 in der Holzbearbeitung, zum Verpacken und auf dem Sektor der allgemeinen Montage, insbesondere für die Montage von Komponenten von Elektrogeräten, Keramiken, Möbeln, Textilien, Polstermaterialien, Leder, Kunststoffmaterialien, Papier und Pappe.

11. Verwendung nach Anspruch 10 von einer Zusammensetzung nach Anspruch 8 in der Holzbearbeitung und dem Sektor der allgemeinen Montage, insbesondere für die Montage von Komponenten von Elektrogeräten, Keramiken, Möbeln, Textilien, Polstermaterialien, Leder und/oder Kunststoffen.

12. Verwendung nach Anspruch 10 von einer Zusammensetzung nach Anspruch 9 in dem Verpackungssektor, insbesondere zur Montage von Papier und/oder Pappe.


**Revendications**

1. Composition adhésive thermofusible comprenant :

   (A) 25 à 75 % en poids d'un copolymère de butène-1 et d'au moins un comonomère choisi parmi l'éthylène, le propylène, les alpha-oléfines en C5-C10 et leurs mélanges, présentant une teneur en comonomères copolymérisés de 0,5 à 5,0 % en poids et un indice de fluidité à chaud (MFR) mesuré selon la norme ISO 1133 (190 °C, 2,16 kg) supérieur à 1500 : et
   (B) 75 à 25 % en poids d'au moins un constituant supplémentaire choisi parmi les cires, les résines, les plastifiants, des polymères supplémentaires et leurs mélanges,

   les quantités de A) et B) se rapportant au poids total de A) + B).

2. Composition adhésive thermofusible selon la revendication 1, le constituant copolymère de butène-1 (A) présentant un indice de fluidité à chaud (MFR) mesuré selon la norme ISO 1133 (190 °C, 2,16 kg) supérieur à 2000, plus préférablement supérieur ou égal à 2200 g/10 min, encore plus préférablement supérieur ou égal à 2400 g/10 min.

3. Composition adhésive thermofusible selon la revendication 1 ou 2, le constituant copolymère de butène-1 (A) présentant un MFR mesuré selon la norme ISO1133 (190 °C, 2,16 kg) inférieur à 3000 g/10 min, préférablement situé dans la plage supérieure à 1500 à 3000 g/10 min, plus préférablement dans la plage supérieure à 2000 à 2900 g/10 min, plus préférablement dans la plage 2200 à 2800 g/10 min, particulièrement préférablement dans la plage 2400 à 2700 g/10 min.

4. Composition adhésive thermofusible selon l'une quelconque des revendications 1 à 3, le constituant copolymère de butène-1 (A) présentant une teneur en comonomères copolymérisés de 0,5 à 3,0 % en poids, plus préférablement de 0,7 à 2,0 % en poids.

5. Composition adhésive thermofusible selon l'une quelconque des revendications 1 à 4, ledit au moins un comonomère étant choisi parmi l'éthylène, le propylène, l'hexène-1, l'octène-1 et leur mélange, ledit au moins un comonomère étant préférablement l'éthylène.

6. Composition adhésive thermofusible selon l'une quelconque des revendications 1 à 4, le constituant copolymère de butène-1 (A) présentant au moins l'une des caractéristiques supplémentaires suivantes :

   (a) une distribution des poids moléculaires (Mw/Mn) inférieure à 4, préférablement inférieure à 3 ; plus préférablement inférieure à 2,5, la limite inférieure étant de 1,5 dans tous les cas ;
   (b) un point de fusion (TmII) inférieur à 110 °C, préférablement inférieur à 100 °C, plus préférablement inférieur à 90 °C ;
   (c) un point de fusion (TmII) supérieur à 80 °C ;
   (d) une température de transition vitreuse (Tg) dans la plage de -40 °C à -10 °C préférablement de -30 °C à -10 °C ;
   (e) une viscosité rotationnelle à 180 °C, à un taux de cisaillement de 100 s-1, inférieur à 8000 mPa.s, préférablement égal ou inférieur à 7000 mPa.s, plus préférablement égal ou inférieur à 6000 mPa.s, encore plus préférablement inférieur à 5000 mPa.s, la limite inférieure étant de 3000 mPa.s dans tous les cas ;
(f) une cristallinité aux rayons X située dans la plage de 25 à 60 %, préférablement dans la plage de 35 à 60 %.

7. Composition adhésive thermofusible selon l'une quelconque des revendications 1 à 6, la composition présentant une viscosité rotationnelle à 190 °C (taux de cisaillement 100 s-1) inférieure à 10.000 mPa.s, plus préférablement inférieure à 7500 mPa.s, encore plus préférablement inférieure à 6000 mPa.s.

8. Composition adhésive thermofusible selon l'une quelconque des revendications 1 à 7, ladite composition comprenant :

(A) 65 à 75 % en poids d'un copolymère de butène-1 et d'au moins un comonomère choisi parmi l'éthylène, le propylène, les alpha-oléfines en C5-C10 et leurs mélanges, présentant une teneur en comonomères copolymérisés de 0,5 à 5,0 % en poids et un indice de fluidité à chaud (MFR) mesuré selon la norme ISO 1133 (190 °C, 2,16 kg) supérieur à 1500 ; et
(B.2) 25 à 35 % en poids d'au moins une résine.

les quantités de (A) et (B.2) se rapportant au poids total de (A) + (B.2) et le constituant (A) étant tel que décrit dans l'une quelconque des revendications 1 à 6.

9. Composition adhésive thermofusible selon l'une quelconque des revendications 1 à 7, la composition comprenant :

(A) 30 à 40 % en poids d'un copolymère de butène-1 et d'au moins un comonomère choisi parmi l'éthylène, le propylène, les alpha-oléfines en C5-C10 et leurs mélanges, présentant une teneur en comonomères copolymérisés de 0,5 à 5,0 % en poids et un indice de fluidité à chaud (MFR) mesuré selon la norme ISO 1133 (190 °C, 2,16 kg) supérieur à 1500 ;
(B.2) 42 à 52 % en poids d'au moins une résine ; et
(B.1) 15 à 25 % en poids d'au moins une cire,

les quantités de (A), (B.1) et (B.2) se rapportant au poids total de (A) + (B.1) + (B.2) et le constituant (A) étant tel que décrit dans l'une quelconque des revendications 1 à 6.

10. Utilisation de la composition adhésive thermofusible selon l'une quelconque des revendications 1 à 9 dans le travail du bois, pour l'emballage et dans le domaine général de l'assemblage, en particulier pour assembler des composants d'équipement électrique, les céramiques, le mobilier, les textiles, le rembourrage, le cuir, le plastique, le papier et le carton.

11. Utilisation selon la revendication 10 d'une composition selon la revendication 8 dans le travail du bois et dans le domaine général de l'assemblage, en particulier pour assembler des composants d'équipement électrique, les céramiques, le mobilier, les textiles, le rembourrage, le cuir et/ou le plastique.

12. Utilisation selon la revendication 10 d'une composition selon la revendication 9 dans le domaine de l'emballage, en particulier pour l'assemblage de papier et/ou de carton.

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 671431 A
- EP 314495 A
- US 2008190541 A1
- US 6218457 B1
- WO 2015074830 A
- WO 2018007451 A
- EP 3266825 A
- WO 2004099269 A
- WO 2006045687 A
- WO 0147939 A